# EUROPÄISCHE PATENTANMELDUNG

(11) **EP 3 531 583 A1**
(43) Veröffentlichungstag der Anmeldung: **28.08.2019**
(21) Anmeldenummer: 19152989.0
(22) Anmeldetag: 22.01.2019
(51) Int. Cl.: H04B 10/112, H04B 10/114

(54) **OPTOELEKTRONISCHE VORRICHTUNG UND VERFAHREN ZUR OPTISCHEN DATENKOMMUNIKATION**

(30) Priorität: 23.02.2018 DE 102018104174
(71) Anmelder: Sick AG, 79183 Waldkirch (DE)
(72) Erfinder: Tschuch, Dr. Sebastian, 79104 Freiburg (DE); Menzel, Simon, 79194 Gundelfingen (DE)

(57) **Zusammenfassung**

Es wird eine optoelektronische Vorrichtung (10) zur optischen Datenkommunikation zwischen zwei Sensoreinheiten (12a-b) mit jeweils einem Lichtsender (14a-b), einem Lichtempfänger (18a-b) und einer Steuer- und Auswertungseinheit (22a-) angegeben, wobei Daten auf ein ausgesandtes Lichtsignal (26a-b) aufmoduliert und in der anderen Sensoreinheit (12-a) aus dem Datensignal des empfangenen Lichtsignals (26a-b) ausgelesen werden sowie der Abstand zwischen den Sensoreinheiten (12a-b) in einer ersten optischen Abstandsbestimmung aus dem Datensignal bestimmt wird. Weiterhin weist eine der Sensoreinheiten (12a) einen Zusatzsensor (28) auf, der für eine zweite optische Abstandsbestimmung für den Abstand zwischen den Sensoreinheiten (12a-b) ausgebildet ist.

## Beschreibung

Die Erfindung betrifft eine optoelektronische Vorrichtung, insbesondere eine Datenlichtschranke, und ein Verfahren zur optischen Datenkommunikation nach dem Oberbegriff von Anspruch 1 beziehungsweise 13.

Für die drahtlose Kommunikation wird in den meisten Fällen Funk eingesetzt. Aus verschiedenen Gründen, wie Kosten, Verfügbarkeit von Frequenzbändern oder diversen Störfaktoren, ist aber eine Funkkommunikation nicht immer möglich. Eine alternative optische Datenübertragung basiert auf mit den Daten modulierten Lichtstrahlen, die im Freiraum von einem Punkt zu einem anderen Punkt übertragen werden. Im industriellen Umfeld wird diese Technik beispielsweise zur Kommunikation mit autonom bewegten Einheiten verwendet. Optoelektronische Vorrichtungen zur berührungslosen Datenkommunikation, also über Lichtstrahlen und nicht Lichtleiter, werden auch als Datenlichtschranken bezeichnet. Sie weisen zwei Sensoreinheiten an den jeweiligen Kommunikationspunkten auf, die über die Lichtstrahlen miteinander in Verbindung stehen.

Bei Anwendungen mit autonom bewegten Einheiten ist folglich mindestens eine der Sensoreinheiten mobil. Der Betrieb mit solchen bewegten Einheiten, wie etwa automatisiert bewegten schienengebundenen Fahrzeugen, verlangt zuverlässige Positionierungen nicht nur für korrekte Abläufe, sondern auch aus Sicherheitsgründen, um Schaden von Gebäuden, Anlagen und Menschen abzuwenden. Das ist insbesondere bei Regalbediengeräten von Bedeutung, da diese relativ schwer sind und mit großen Geschwindigkeiten bewegt werden, folglich eine hohe kinetische Energie besitzen. Eine herkömmliche Lösung besteht darin, an beiden Enden einer Verfahrstrecke jeweils einen mechanischen Puffer vorzusehen, so dass es bei einer Fehlpositionierung nicht zu Unfällen kommt. Dafür muss jedoch entsprechender Bauraum vorgehalten werden, und die dafür benötigte Fläche wird letztlich bei hohen Kosten nicht sinnvoll genutzt.

Durch Abstandsmessung zwischen den Sensoreinheiten ließe sich die erforderliche Positionsinformation für die Ansteuerung oder Überwachung der autonom bewegten Einheit prinzipiell gewinnen. Allerdings bestehen, wenn es um Unfallvermeidung geht, die hohen Anforderungen der Sicherheitstechnik, die beispielsweise in der Norm EN/ISO 13849 für Maschinensicherheit niedergelegt sind. Zu deren Erfüllung sind eine Reihe von Maßnahmen zu treffen, wie etwa Selbstüberwachung oder Redundanz beziehungsweise diversitäre Redundanz in der Erfassung und Verarbeitung von Messwerten.

Herkömmliche Datenlichtschranken sind nicht gemäß solchen sicherheitstechnischen Normen ausgelegt, und daher erfolgt die sichere Positionierung auch nicht aufgrund einer Abstandsbestimmung der Sensoreinheiten. Stattdessen ist bekannt, den Antriebsstrang der bewegten Einheit zu überwachen, beispielsweise mit einem Absolutgeber oder Motofeedbacksystem. Das birgt die Gefahr von Schlupf zwischen Antrieb und tatsächlicher Fortbewegung. Selbst wenn man das in den Griff bekommt oder die bewegte Einheit extern auf ihre tatsächliche Bewegung hin überwacht, so bleibt ein beträchtlicher Aufwand zu leisten. Um die erforderliche Sicherheit zu erlangen, sind zwei unabhängige Überwachungssysteme notwendig. Das bedeutet zunächst deutlich erhöhten Aufwand wegen des zweiten Systems. Außerdem müssen die jeweiligen Eingangsdaten speziell aufeinander abgestimmt und deren Überwachung koordiniert werden, was sich meist nur im Rahmen von aufwändigen Einzellösungen realisieren lässt.

Aus der DE 10 2014 111 589 A1 ist ein Verfahren zur simultanen Datenübertragung und Abstandsmessung mit einer Datenlichtschranke bekannt. Der Abstand wird anhand der übertragenen Datensignale durch eine Lichtlaufzeitmessung anhand einer Verzögerung gegenüber dem internen Systemtakt bestimmt. Diese Abstandsbestimmung ist aber nicht sicher.

Die DE 10 2008 059 819 B4 offenbart eine Kommunikationsvorrichtung mittels Funk, die zusätzlich ein Mittel zur optischen Entfernungsmessung aufweist. Auch diese Abstandsbestimmung mit nur einem Mittel zur optischen Entfernungsmessung ist nicht sicher.

Es ist daher Aufgabe der Erfindung, die Positionsbestimmung mit einer Datenlichtschranke zu verbessern.

Diese Aufgabe wird durch eine optoelektronische Vorrichtung und ein Verfahren zur optischen Datenkommunikation nach Anspruch 1 beziehungsweise 13 gelöst. Die Vorrichtung weist zwei einander gegenüber angeordnete Sensoreinheiten oder Sende-Empfangseinheiten mit einer Freiraumübertragungsstrecke dazwischen auf. Die Sensoreinheiten umfassen jeweils einen Lichtsender, einen Lichtempfänger und eine Steuer- und Auswertungseinheit. Zu übertragende Daten werden in der einen Sensoreinheit in das ausgesandte Lichtsignal eincodiert, und in der anderen Sensoreinheit wird aus dem Lichtsignal ein als Datensignal bezeichnetes Empfangssignal erzeugt, aus dem die Daten ausgelesen werden. Die Modulation des Lichtstrahls und das Demodulieren oder Auslesen erfolgen gemäß einem Kommunikationsprotokoll.

Der Abstand zwischen den Sensoreinheiten wird nun ein erstes Mal aus der optischen Datenverbindung durch weitere Auswertung des Datensignals bestimmt. Diese Auswertung ist zunächst unabhängig von den in dem Datensignal codierten Daten, erfolgt also nicht anhand des Kommunikationsprotokolls. Es ist aber nicht ausgeschlossen, auch codierte Informationen zumindest unterstützend für die erste optische Abstandsbestimmung zu nutzen.

Für die Datenübertragung sind die Steuer- und Auswertungseinheiten gemeinsam ausgebildet. Das bedeutet zumindest, dass die eine Steuer- und Auswertungseinheit zum Senden und damit Modulieren, die andere Steuer- und Auswertungseinheit zum Empfangen und damit Auslesen ausgebildet ist. Vorzugsweise sind die Steuer- und Auswertungseinheiten jeweils einzeln für Senden und Empfangen von Daten ausgebildet, um eine bidirektionale Kommunikation zu ermöglichen. Die erste optische Abstandsbestimmung ist in zumindest einer der Steuer- und Auswertungseinheiten implementiert, wobei sie aber vorzugsweise von der anderen Steuer- und Auswertungseinheit beispielsweise für eine Synchronisation oder Versorgung mit Hilfsgrößen unterstützt wird

Die Erfindung geht von dem Grundgedanken aus, den Abstand zwischen den Sensoreinheiten in einer zweiten optischen Abstandsbestimmung ein weiteres Mal zu messen. Dazu weist die erste Sensoreinheit einen Zusatzsensor auf, der für die zweite optische Abstandsbestimmung ausgebildet ist. Die Wahl der ersten Sensoreinheit für den Zusatzsensor folgt ohne Beschränkung der Allgemeinheit, ebenso könnte die zweite Sensoreinheit den Zusatzsensor aufweisen, oder es sind sogar beide Sensoreinheiten mit einem Zusatzsensor ausgestattet.

Die Erfindung hat den Vorteil, dass durch die erste und zweite optische Abstandsbestimmung zwei unabhängige Messwerte für den Abstand zwischen den beiden Sensoreinheiten gewonnen werden. Dieser diversitär-redundant und damit sicher bestimmte Abstand lässt sich für eine sichere Positionierung beispielsweise von Fahrzeugen, Regalbedieneinheiten oder allgemein bewegten Einheiten nutzen. Der Ausfall einer der beiden Abstandsbestimmungen wird durch einen Vergleich aufgedeckt. In weiteren Ausführungsformen wird dargelegt, wie dies mit einem Minimum an zusätzlichen Komponenten durch möglichst doppelte Ausnutzung, jedoch unter Beibehaltung der Unabhängigkeit beider Abstandsbestimmungen gelingt.

Die Vorrichtung ist vorzugsweise sicher im Sinne einer Sicherheitsnorm, insbesondere der einleitend genannten ISO 13849 oder einer entsprechenden heutigen oder zukünftigen Norm. Gemäß ISO 13849 wird eine sicherheitstechnische Kategorie 3 erreicht, nämlich eine Absicherung mit zwei unabhängigen Eingangsgrößen, die für sich nicht weiter abgesichert sind. Letzteres wäre aber für eine noch höhere Sicherheitskategorie vorstellbar.

Die Steuer- und Auswertungseinheiten sind bevorzugt dafür ausgebildet, für die erste optische Abstandsbestimmung eine Lichtlaufzeit des Lichtsignals aus einem Versatz von Flanken des Datensignals gegen eine interne Uhr zu bestimmen. Diese Auswertung findet vorzugsweise in der ersten Sensoreinheit statt, die auch den Zusatzsensor umfasst, so dass die entsprechende Funktionalität in der ersten Steuer- und Auswertungseinheit implementiert ist. Eine entsprechende Ausgestaltung der zweiten Steuer- und Auswertungseinheit ist aber ebenso denkbar wie unterstützende Funktionen dort. Die interne Uhr ist beispielsweise ein Systemtakt. Die erste Sensoreinheit hat eine Erwartung, mit welchem Offset die Flanken des Datensignals gegen die interne Uhr ausgesandt sind, beispielsweise gerade ohne Offset. Das Offset verändert sich mit dem Abstand zwischen den Sensoreinheiten und ist somit ein Maß für die Lichtlaufzeit.

Die Steuer- und Auswertungseinheiten sind bevorzugt dafür ausgebildet, jeweilige interne Uhren durch Austausch von Datensignalen zu synchronisieren. Damit ist sichergestellt, dass die Erwartung an die Lage der Flanken des Datensignals richtig und nicht beispielsweise durch ein Auseinanderlaufen der Systemtakte in den beiden Sensoreinheiten verfälscht ist.

Die Steuer- und Auswertungseinheiten sind bevorzugt dafür ausgebildet, in dem Datensignal eine Zeitinformation über den Sendezeitpunkt des Lichtsignals zu übertragen. Beispielsweise schickt eine Steuer- und Auswertungseinheit ein Datenpaket mit einem Zeitstempel des Sendezeitpunkts. Die gegenüberliegende Auswertungseinheit bestimmt den Empfangszeitpunkt des Lichtsignals und kennt dann mit dem Sendezeitpunkt auch die Lichtlaufzeit. Das setzt natürlich synchronisierte interne Uhren voraus, ansonsten entsteht ein zusätzlicher Synchronisationsfehler.

Der Zusatzsensor weist bevorzugt einen Zusatzlichtempfänger auf. Die erste Sensoreinheit umfasst somit zwei Lichtempfänger, nämlich den ersten Lichtempfänger für den Datenaustausch und den Zusatzlichtempfänger des Zusatzsensors für die zweite optische Abstandsbestimmung. Der Zusatzlichtempfänger registriert Licht von der gegenüber angeordneten zweiten Sensoreinheit, und zwar vorzugsweise in einem Tastprinzip Licht, das von der ersten Sensoreinheit ausgeht und von der zweiten Sensoreinheit in den Zusatzlichtempfänger reflektiert wird.

Der Zusatzlichtempfänger ist bevorzugt derart angeordnet, dass darauf Licht des ersten Lichtsenders nach Reflexion an der zweiten Sensoreinheit fällt. Die zweite optische Abstandsbestimmung basiert demnach auf dem Licht, das auch für die Datenübertragung genutzt wird, jedoch auf den Lichtanteilen, die nicht wie für die Datenübertragung vorgesehen in der zweiten Sensoreinheit ankommen, sondern auf zu der ersten Sensoreinheit zurückreflektierten Lichtanteilen. Der Zusatzsensor benötigt keine eigene Lichtquelle, sondern der erste Lichtsender hat eine Doppelfunktion für die Datenübertragung an die andere, zweite Sendeeinheit und für die zweite optische Abstandsbestimmung anhand des eigenen Lichts des ersten Lichtsenders. Eine eigene Lichtquelle ist alternativ denkbar, aber abgesehen von dem Zusatzaufwand ist das eine zusätzliche Quelle von störendem Streulicht.

Der Zusatzsensor ist bevorzugt dafür ausgebildet, für die zweite Abstandsbestimmung anhand des Zusatzempfangssignals des Zusatzlichtempfängers eine Lichtlaufzeit zu bestimmen. Der Zusatzsensor arbeitet demnach mit einem Lichtlaufzeitprinzip. Es ist wichtig, das Zusatzempfangssignal und das Datensignal auseinanderzuhalten. Das Datensignal entsteht an der jeweils gegenüberliegenden Sensoreinheit in deren Lichtempfänger für die Datenkommunikation, das Zusatzempfangssignal in dem Zusatzsensor. Das Zusatzempfangssignal wird auch nicht im Hinblick auf die codierten Daten ausgewertet. Die zweite Abstandsbestimmung ist unabhängig von dem Kommunikationsprotokoll, außerdem würde die erste Sensoreinheit nur mit sich selbst beziehungsweise ihrem eigenen Zusatzsensor kommunizieren. Abgesehen von den unterschiedlichen Signalwegen und Auswertungen ist aber der Signalverlauf von Zusatzempfangssignal und Datensignal weitgehend identisch, sieht man von Zeitversatz, Übertragungsverlusten und Störeffekten ab, denn beide entstehen durch Empfang desselben Lichtsignals. Auswertungen des Zusatzsensors können in dessen eigener Auswertungseinheit erfolgen, oder die erste Auswertungseinheit wird dafür mitgenutzt. Im letzteren Fall müssen aber Vorkehrungen für Fehler in der ersten Auswertungseinheit getroffen werden, weil sonst die Sicherheit beziehungsweise Unabhängigkeit der beiden Abstandsmessungen nicht mehr gewahrt wäre.

Der Zusatzsensor weist bevorzugt einen Referenzlichtempfänger zum Erzeugen eines Referenzempfangssignals auf, der derart angeordnet ist, dass darauf auf direktem Weg Licht des ersten Lichtsenders fällt. Der Lichtweg von dem ersten Lichtsender zu dem Referenzlichtempfänger ist demnach eine Art optischer Kurzschluss und bleibt innerhalb der ersten Sensoreinheit, ohne den eigentlichen Messlichtweg der zweiten Abstandsmessung zu der zweiten Sensoreinheit und zurück zur ersten Sensoreinheit.

Der Zusatzsensor ist bevorzugt dafür ausgebildet, die Lichtlaufzeit durch eine Kreuzkorrelation des Zusatzempfangssignals des Zusatzlichtempfängers mit dem Referenzempfangssignal des Referenzlichtempfängers zu bestimmen. Der Signalverlauf von Zusatzempfangssignal und Referenzempfangssignal ist gleich, sieht man von Übertragungs- und Störeffekten ab. Sie entstehen beide aus dem Lichtsignal des ersten Lichtsenders, haben aber einen Zeitversatz, der gerade dem Messlichtweg der zweiten Abstandsmessung zu der zweiten Sensoreinheit und zurück zur ersten Sensoreinheit entspricht. Durch eine Kreuzkorrelation kann dieser Zeitversatz und damit die Lichtlaufzeit bestimmt werden. Das entspricht dem bekannten Phasenverfahren zur Lichtlaufzeitmessung, mit dem Unterschied, dass hier keine Sinusmodulation aufgeprägt ist, sondern die Daten, aus denen sich aber ebenso der Zeitversatz erkennen lässt. Ein übliches Phasen-, Puls- oder Pulsmittelungsverfahren anstelle einer Auswertung der durch die Daten schon gegebenen Modulation ist prinzipiell nicht ausgeschlossen. Dazu müssten aber dem Lichtsignal des ersten Lichtsenders entsprechende zyklische Modulationen oder Pulse aufgeprägt werden. Das wiederum müsste mit der Datenkommunikation koordiniert werden, damit die Modulationen für die Laufzeitmessung nicht als Daten fehlinterpretiert werden, und das kostet nicht nur Aufwand, sondern auch Bandbreite bei der Datenkommunikation.

Der erste Lichtsender und der zweite Lichtsender weisen bevorzugt Licht einer unterschiedlichen Wellenlänge auf, wobei die erste Sensoreinheit ein optisches Trennungselement aufweist, um nur Licht des ersten Lichtsenders dem Zusatzsensor und/oder nur Licht des zweiten Lichtsenders dem ersten Lichtempfänger zuzuführen. Unterschiedliche Wellenlängen für den Hin- und Rückkanal sind bei einer Datenlichtschranke auch herkömmlich oft vorgesehen, um die Kanäle sauber zu trennen und Probleme mit Streulicht zu vermeiden. Durch das optische Trennungselement wird dafür gesorgt, dass das Licht des ersten Lichtsenders tatsächlich nur den Zusatzsensor beziehungsweise das Licht des zweiten Lichtsenders tatsächlich nur den ersten Lichtempfänger trifft. Damit wird ein Übersprechen von Datenkommunikation und erste Abstandsmessung einerseits und zweiter Abstandsmessung andererseits verhindert.

Die zweite Sensoreinheit weist bevorzugt einen Reflektor zum Reflektieren eines Anteils des Lichtsignals des ersten Lichtsenders auf. Das verbessert die zweite Abstandsbestimmung erheblich, weil für einen ausreichenden, den Zusatzsensor erreichenden Lichtanteil des Lichtsignals des ersten Lichtsenders gesorgt wird. Durch geeignete Anordnung und Auslegung kann dieser Lichtanteil noch weiter optimiert werden. Ein gewisser Lichtanteil würde auch ohne Reflektor beispielsweise an einem Gehäuse der zweiten Sensoreinheit reflektiert, jedoch mit undefinierter Intensität und Ausrichtung, die über den Reflektor gesteuert werden kann.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die einzige Abbildung der Zeichnung zeigt in:

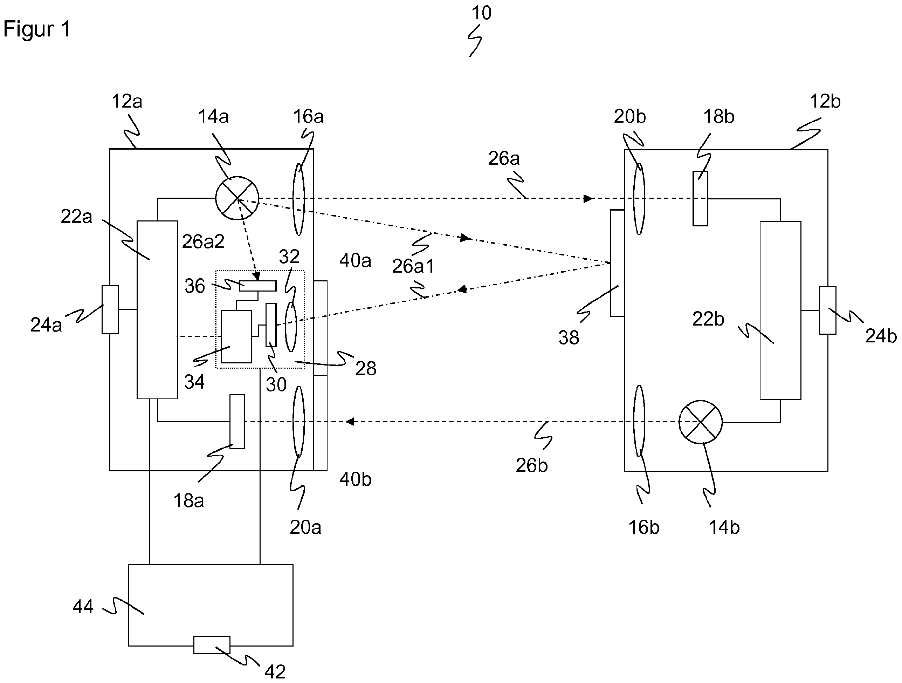

- Fig. 1: eine schematische Schnittdarstellung einer optoelektronischen Vorrichtung zur optischen Datenkommunikation.

Figur 1 zeigt eine schematische Schnittdarstellung einer optoelektronischen Vorrichtung 10 mit einer ersten Sensoreinheit 12a und einer zweiten Sensoreinheit 12b. Obwohl denkbar ist, die beiden Sensoreinheiten 12a-b für eine unidirektionale Datenübertragung als Sender beziehungsweise Empfänger auszugestalten, wird die Erfindung an der dargestellten Ausführungsform beschrieben, in welcher die beiden Sensoreinheiten 12a-b sowohl als Sender, wie als Empfänger fungieren.

Dazu weist jede Sensoreinheit 12a-b jeweils einen Lichtsender 14a-b, beispielsweise eine Laser- oder LED-Lichtquelle, mit einer Sendeoptik 16a-b, einen Lichtempfänger 18a-b, beispielsweise eine Photodiode, mit einer Empfangsoptik 20a-b sowie eine Steuer- und Auswertungseinheit 22a-b und eine Schnittstelle 24a-b auf. Die Steuer- und Auswertungseinheiten 22a-b sind vorzugsweise jeweils auf einem oder mehreren digitalen Bausteinen implementiert, wie Mikroprozessor, FPGA (Field Programmable Gate Array) oder ASIC (Application-Specific Integrated Circuit). Die Schnittstellen 24a-b können nach einem beliebigen Standard ausgestaltet sein, beispielsweise Ethernet oder Profibus, und es können auch mehrere derartige Schnittstellen vorgesehen sein.

In einer Anwendung an automatisierten Regalbedieneinheiten wird beispielsweise die eine Sensoreinheit 12a-b stationär montiert, während die andere Sensoreinheit 12b-a mit einer Bedieneinheit längs des Regals verfahren wird. Die Vorrichtung 10 dient dann dazu, Daten zu kommunizieren, um die Bedieneinheit zu steuern oder Informationen von der Bedieneinheit auszulesen. Anstelle einer Bedieneinheit sind andere insbesondere automatisiert bewegte Einheiten möglich, und auch eine beidseitig mobile oder beidseitig stationäre Montage ist vorstellbar.

Für einen Datenaustausch zwischen den beiden Sensoreinheiten 12a-b wird ein Lichtstrahl 26a beziehungsweise für eine Datenübertragung in Gegenrichtung ein Lichtstrahl 26b vorzugsweise im Infrarotbereich von dem Lichtsender 14a-b der einen Sensoreinheit 12a-b ausgesandt und von dem Lichtempfänger 18b-a der anderen Sensoreinheit 12b-a empfangen. Die Nutzdaten werden nach einem an sich bekannten Kommunikationsprotokoll, wie Ethernet insbesondere nach dem Standard 100BASE-FX, oder auch einem proprietären Kommunikationsprotokoll sendeseitig aufmoduliert und empfangsseitig nach Demodulation ausgelesen. Aufgrund des symmetrischen Aufbaus der Sensoreinheiten 12a-b ist ein bidirektionaler Nutzdatenaustausch möglich. Über die Schnittstelle 24a-b kann der Kommunikationsweg leitungsgebunden oder drahtlos auf nicht optischem Weg fortgesetzt werden, wobei diese Schnittstellen 24a-b zusätzlich genutzt werden können, um die Sensoreinheiten 12a-b zu parametrieren oder zu diagnostizieren. Auch eine Kaskadierung mit einer weiteren optischen Vorrichtung 10 und somit weiterer optischer Datenübertragung im Freiraum ist möglich.

Zusätzlich zu der Datenkommunikation ist zumindest die Steuer- und Auswertungseinheit 22a der ersten Sensoreinheit 12a in der Lage, anhand eines mit ihrem Lichtempfänger 18a aus dem empfangenen Lichtstrahl 26b erzeugten Empfangssignals, das als Datensignal bezeichnet wird, den Abstand zu der zweiten Sensoreinheit 12b zu bestimmen. Dies soll nun kurz anhand von zwei nicht abschließend genannten Beispielen erläutert werden.

In einer Ausführungsform wird dazu ein Systemtakt der ersten Sensoreinheit 12a als interne Uhr verwendet. Der Versatz der Flanken der dem Datensignal aufmodulierten Datenbits zu dem Systemtakt ist ein Maß für die Lichtlaufzeit zwischen den Sensoreinheiten 12a-b und somit über die konstante Lichtgeschwindigkeit auch für den Abstand. Besonders anschaulich verständlich ist das für ein System, bei dem die Flanken der Datenbits bei einem fiktiven Abstand Null mit dem Systemtakt zusammenfallen. Das Gitter der Flanken der Datenbits verschiebt sich dann mit zunehmendem Abstand der Sensoreinheiten 12a-b immer weiter gegen den Systemtakt.

Voraussetzung dafür ist, dass die Datenbits mit wohldefiniertem Zeitbezug zu dem Systemtakt ausgesandt werden, und damit eine Synchronisierung zwischen den Sensoreinheiten 12a-b. Die Synchronisierung kann durch Austausch von Daten aktualisiert werden. Weitere Erläuterungen und vorteilhafte Ausgestaltungen der ersten Abstandsmessung anhand des Datensignals können der einleitend genannten DE 10 2014 111 589 A1 entnommen werden.

Eine andere Möglichkeit der Abstandsbestimmung auf dem Datenkanal ist, dass die eine Sensoreinheit 12a-b der anderen Sensoreinheit 12b-a ein Datentelegramm mit dem Sendezeitpunkt schickt. Die andere Sensoreinheit 12b-a muss dann nur noch den Empfangszeitpunkt bestimmen und kennt danach die Lichtlaufzeit als Differenz von Empfangszeitpunkt und Sendezeitpunkt. Das setzt natürlich eine Synchronisierung voraus.

Zusätzlich zu der soeben erläuterten Abstandsbestimmung aus dem Datensignal wird der Abstand zwischen den Sensoreinheiten 12a-b ein zweites Mal unabhängig optisch gemessen. Dazu ist in oder an der ersten Sensoreinheit 12a ein Zusatzsensor 28 vorgesehen. Der Zusatzsensor 28 umfasst einen Zusatzlichtempfänger 30 mit Zusatzempfangsoptik 32 und eine Zusatzauswertungseinheit 34 für das Zusatzempfangssignal des Zusatzlichtempfängers 30. Außerdem ist vorzugsweise noch ein Referenzlichtempfänger 36 vorgesehen, dessen Referenzempfangssignal ebenfalls an die verbundene Zusatzauswertungseinheit 34 weitergegeben wird.

Um eine geforderte Sicherheit zu erreichen, ist der Zusatzsensor 28 vorzugsweise autonom und besitzt beispielsweise eine separate Versorgung. Alternativ ist aber auch vorstellbar, elektronische Anschlüsse und Komponenten für die Datenkommunikation und erste Abstandsbestimmung mit zu nutzen. So kann beispielsweise die Zusatzauswertungseinheit 34 mit der ersten Steuer- und Auswertungseinheit 22a kombiniert werden. Um die Sicherheit zu erhalten, sind dann aber weitere Maßnahmen wie Selbsttests erforderlich, weil so die erreichte Unabhängigkeit durch zwei Signalquellen nur noch teilweise gewahrt ist und ohne solche Maßnahmen eine Fehlfunktion der Steuer- und Auswertungseinheit 22a unerkannt bleiben könnte.

Auf den Zusatzlichtempfänger 30 treffen Lichtanteile 26a1 des Lichtstrahls 26a des ersten Lichtsenders 14a, die an der zweiten Sensoreinheit 12b reflektiert werden. Um diese Reflexion zu unterstützen und gegebenenfalls in ihrer Intensität und Richtung anzupassen, kann an der zweiten Sensoreinheit 12b ein Reflektor 38 angebracht werden. Der Reflektor 38 beeinflusst das Zusatzempfangssignal je nach Größe, Typ, Position und Ausrichtung. Die zweite Abstandsbestimmung benötigt zwar einen ausreichenden Signalpegel, ist jedoch wesentlich unempfindlicher als die Datenübertragung.

Der Referenzlichtempfänger 36 andererseits wird auf direktem Weg mit Lichtanteilen 26a2 von dem ersten Lichtsender 14a beschienen, also ohne den Lichtweg zu der zweiten Sensoreinheit 12b und zurück.

Die Signalform sowohl des Zusatzempfangssignals als auch des Referenzempfangssignals sind durch die Modulation des ersten Lichtsenders 14a bestimmt. Sie unterscheiden sich bis auf unbeachtliche Übertragungsverluste durch einen Zeitversatz, der gerade der Lichtlaufzeit auf dem Weg der Lichtanteile 26a1 zu der zweiten Sensoreinheit 12b und zurück und damit bis auf Konstanten dem gesuchten Abstand entspricht. Dieser Zeitversatz lässt sich beispielsweise ermitteln, indem die Zusatzauswertungseinheit 34 eine Kreuzkorrelation des Zusatzempfangssignals und des Referenzempfangssignals berechnet, in der sich bei dem gesuchten Zeitversatz ein ausgeprägter Peak bildet.

Die Sensoreinheiten 12a-b benutzen vorzugsweise zur optischen Kanaltrennung unterschiedliche Wellenlängen. Daher ist es vorteilhaft, ein optisches Filter 40a vor dem Zusatzlichtempfänger 30 anzuordnen, das auf den ersten Lichtsender 14a abgestimmt ist, so dass dort nur die für die zweite Abstandsbestimmung genutzten reflektierten Lichtanteile 26a1 ankommen. Entsprechend kann ein auf den zweiten Lichtsender 14b abgestimmtes optisches Filter 40b verhindern, dass die nun durch den Reflektor 38 erhöhten Reflexionen des eigenen Lichts des Lichtsenders 14a den Empfang des Lichtstrahls 26b von der gegenüberliegenden Sensoreinheit 12b störend überlagern.

In einer bevorzugten Ausführungsform werden die Empfangsoptik 20a und die Zusatzempfangsoptik 32 in einer einzigen Optik, vorzugsweise einer einzigen Empfangslinse zusammengefasst. Die Signaltrennung erfolgt dann hinter der Empfangsoptik 20a anhand der Wellenlängen mit optischen Filtern, beispielsweise einem dichroitischen Spiegel als wellenlängenspezifischer Strahlteiler für je einen nachgeordneten Teilempfangspfad für Datensignal und Zusatzempfangssignal.

Die beiden einerseits aus dem Datensignal und andererseits aus dem Zusatzempfangssignal unabhängig voneinander bestimmten Abstände werden beispielsweise an eine Sicherheitssteuerung 42 übertragen. Dort wird überprüft, etwa durch einen Vergleich der Abstände, ob die Abstandsbestimmung noch zuverlässig funktioniert. Andernfalls wird an einem Sicherheitsausgang 44 der Sicherheitssteuerung 42 eine sicherheitsgerichtete Maßnahme eingeleitet, insbesondere ein Verlangsamen, ein Verbringen in eine sichere Position oder ein Nothalt. Diese Überprüfung der Abstände und eine daraus folgende sicherheitsgerichtete Reaktion kann alternativ auch innerhalb der Sensoreinheit 12a erfolgen, muss dann jedoch durch normgerechte Maßnahmen abgesichert werden, die eine Sicherheitssteuerung 42 ohnehin mitbringt.

Die Erfindung wurde anhand eines Zusatzsensors 28 in der ersten Sensoreinheit 12a beschrieben. Der Zusatzsensor 28 kann ebenso in der zweiten Sensoreinheit 12b untergebracht sein, wobei dann auch dort vorzugsweise die erste Abstandsmessung anhand des Datensignals erfolgt. Auch Zusatzsensoren 28 auf beiden Seiten sind vorstellbar, so dass gleichwertige Sensoreinheiten 12a-b mit jeweils diversitär-redundanter Abstandsmessung entstehen.

Die dargestellte Ausführungsform zeigt einen Zusatzsensor 28, der den Lichtstrahl 26a beziehungsweise Lichtanteile 26a1 des für die Datenkommunikation vorhandenen eigenen Lichtsenders 14a nutzt. Außerdem wird vorteilhafterweise, wie oben schon als Alternative beschrieben, auch nur eine gemeinsame Empfangsoptik verwendet. Durch solche Doppelnutzungen wird die Gesamtzahl der Komponenten reduziert, was zu weniger Komplexität, kleineren Geräten und verringerten Herstellkosten führt. Doppelnutzungen sind aber auf den ersten Blick konträr zu der sicherheitstechnischen Forderung nach Unabhängigkeit, die am einfachsten durch streng redundante Komponenten gesichert wäre. Die vorgestellte Ausführungsform strebt hier ein Optimum zwischen geringem Aufwand bei weiterhin sicherer Auslegung an. Bei Versagen des Lichtsenders 14a fallen beide Abstandsbestimmungen aus, was auch in beiden Fällen unabhängig erkannt wird. Ähnliches gilt für eine verschmutzte oder sonst beeinträchtigte Sendeoptik 16a oder eine gemeinsame Empfangsoptik. Es bleibt jeweils trotz Doppelnutzung ein sicherer Zustand garantiert.

Eine einfache Integration eines separaten Abstandssensors mit eigenem Lichtsender und eigenen Optiken ist aber alternativ möglich, ebenso wie Zwischenlösungen beispielsweise mit eigenem Lichtsender, aber gemeinsamer Empfangsoptik. Die Sicherheit kann weiter erhöht werden, indem die einzelnen Abstandsmessungen schon für sich durch Testprozeduren gegen alle systematischen Fehler abgesichert werden. Das würde es sogar ermöglichen, ein sicheres System mit nur einer Abstandsmessung zu realisieren, wobei dies eventuell je nach Auslegung nur eine geringere Sicherheitskategorie 2 erreicht.

## Patentansprüche

1. Optoelektronische Vorrichtung (10) zur optischen Datenkommunikation, insbesondere Datenlichtschranke, die eine erste Sensoreinheit (12a) mit einem ersten Lichtsender (14a), einem ersten Lichtempfänger (18a) und einer ersten Steuer- und Auswertungseinheit (22a) sowie eine gegenüber angeordnete zweite Sensoreinheit (12b) mit einem zweiten Lichtsender (14b), einem zweiten Lichtempfänger (18b) und einer zweiten Steuer- und Auswertungseinheit (22b) aufweist, wobei die Steuer- und Auswertungseinheiten (24a-b) dafür ausgebildet sind, für eine Datenkommunikation zwischen der ersten Sensoreinheit (12a) und der zweiten Sensoreinheit (12b) in der einen Sensoreinheit (12a-b) Daten auf ein mit dem ersten oder zweiten Lichtsender (14a-b) ausgesandtes Lichtsignal (26a-b) aufzumodulieren und in der anderen Sensoreinheit (12b-a) die Daten aus einem mit dem zweiten oder ersten Lichtempfänger (18b-a) aus dem empfangenen Lichtsignal erzeugten Datensignal auszulesen sowie den Abstand zwischen den Sensoreinheiten (12a-b) in einer ersten optischen Abstandsbestimmung aus dem Datensignal zu bestimmen,
**dadurch gekennzeichnet,**
**dass** die erste Sensoreinheit (12a) einen Zusatzsensor (28) aufweist, der für eine zweite optische Abstandsbestimmung für den Abstand zwischen den Sensoreinheiten (12a-b) ausgebildet ist.

2. Vorrichtung (10) nach Anspruch 1,
wobei die Vorrichtung (10) sicher im Sinne einer Sicherheitsnorm ist.

3. Vorrichtung (10) nach Anspruch 1 oder 2,
wobei die Steuer- und Auswertungseinheiten (22a-b) dafür ausgebildet sind, für die erste optische Abstandsbestimmung eine Lichtlaufzeit des Lichtsignals (26a-b) aus einem Versatz von Flanken des Datensignals gegen eine interne Uhr zu bestimmen.

4. Vorrichtung (10) nach einem der vorherigen Ansprüche,
wobei die Steuer- und Auswertungseinheiten (22a-b) dafür ausgebildet sind, jeweilige interne Uhren durch Austausch von Datensignalen zu synchronisieren.

5. Vorrichtung (10) nach einem der vorherigen Ansprüche,
wobei die Steuer- und Auswertungseinheiten (22a-b) dafür ausgebildet sind, in dem Datensignal eine Zeitinformation über den Sendezeitpunkt des Lichtsignals (26a-b) zu übertragen.

6. Vorrichtung (10) nach einem der vorherigen Ansprüche,
wobei der Zusatzsensor (28) einen Zusatzlichtempfänger (30) aufweist.

7. Vorrichtung (10) nach Anspruch 6,
wobei der Zusatzlichtempfänger (30) derart angeordnet ist, dass darauf Licht (26a1) des ersten Lichtsenders (14a) nach Reflexion an der zweiten Sensoreinheit (12b) fällt.

8. Vorrichtung (10) nach Anspruch 6 oder 7,
wobei der Zusatzsensor (28) dafür ausgebildet ist, für die zweite Abstandsbestimmung anhand des Zusatzempfangssignals des Zusatzlichtempfängers (30) eine Lichtlaufzeit zu bestimmen.

9. Vorrichtung (10) nach einem der Ansprüche 6 bis 8,
wobei der Zusatzsensor (28) einen Referenzlichtempfänger (36) zum Erzeugen eines Referenzempfangssignals aufweist, der derart angeordnet ist, dass darauf auf direktem Weg Licht (26a2) des ersten Lichtsenders (14a) fällt.

10. Vorrichtung (10) nach Anspruch 9,
wobei der Zusatzsensor (28) dafür ausgebildet ist, die Lichtlaufzeit durch eine Kreuzkorrelation des Zusatzempfangssignals des Zusatzlichtempfängers (30) mit dem Referenzempfangssignal des Referenzlichtempfängers (36) zu bestimmen.

11. Vorrichtung (10) nach einem der vorherigen Ansprüche,
wobei der erste Lichtsender (14a) und der zweite Lichtsender (14b) Licht einer unterschiedlichen Wellenlänge aufweisen, und wobei die erste Sensoreinheit (12a) ein optisches Trennungselement (40a-b) aufweist, um nur Licht (26a1) des ersten Lichtsenders (14a) dem Zusatzsensor (28) und/oder nur Licht (26b) des zweiten Lichtsenders (14b) dem ersten Lichtempfänger (18a) zuzuführen.

12. Vorrichtung (10) nach einem der vorherigen Ansprüche,
wobei die zweite Sensoreinheit (12b) einen Reflektor (38) zum Reflektieren eines Anteils des Lichtsignals (26a1) des ersten Lichtsenders (14a) aufweist.

13. Verfahren zur optischen Datenkommunikation zwischen zwei Sensoreinheiten (12a-b), wobei in der einen Sensoreinheit (12a-b) Daten auf ein ausgesandtes Lichtsignal (26a-b) aufmoduliert und in der anderen Sensoreinheit (12b-a) die Daten aus einem aus dem empfangenen Lichtsignal (26b-a) erzeugten Datensignal ausgelesen werden sowie der Abstand zwischen den Sensoreinheiten (12a-b) in einer ersten optischen Abstandsbestimmung aus dem Datensignal bestimmt wird,
**dadurch gekennzeichnet,**
**dass** mit einem Zusatzsensor (28) der ersten Sensoreinheit (12a) der Abstand zwischen den Sensoreinheiten (12a-b) in einer zweiten optischen Abstandsbestimmung ein weiteres Mal bestimmt wird.
